# EUROPEAN PATENT SPECIFICATION

(11) **EP 4 223 558 B1**
(45) Date of publication and mention of the grant of the patent: **27.11.2024**
(21) Application number: 22214077.4
(22) Date of filing: 16.12.2022
(51) Int. Cl.: B60C 11/00, B60C 9/06

(54) **MOTORCYCLE TIRE PAIR**
MOTORRADREIFENPAAR
PAIRE DE PNEUS DE MOTOCYCLETTE

(30) Priority: 02.02.2022 JP 2022014784
(43) Date of publication of application: 09.08.2023
(73) Proprietor: Sumitomo Rubber Industries, Ltd., Kobe-shi, Hyogo 651-0072 (JP)
(72) Inventor: KOBORI, Chihiro, Kobe-shi, 651-0072 (JP)
(74) Representative: Manitz Finsterwald Patent- und Rechtsanwaltspartnerschaft mbB

(56) References cited:
- EP-A1- 0 808 730
- JP-A- 2001 055 010
- JP-B2- 3 198 064
- US-A1- 2013 025 759

## Description

### CROSS-REFERENCE TO RELATED APPLICATIONS

This application claims priority on Japanese Patent Application No. 2022-14784 filed on February 2, 2022.

### TECHNICAL FIELD

The present invention relates to motorcycle tire pairs.

### BACKGROUND ART

Tires for two-wheeled vehicles such as for instance motorcycles are generally known, see for instance EP 0 808 730 A1, JP 3 198064 B2, JP 2001 055010 A, or US 2013/025759 A1. A motorcycle corners with a vehicle body thereof tilted. The tread surface of each tire mounted on the motorcycle has a rounded shape. During straight running, a portion at an equator plane of the tread surface mainly comes into contact with a road surface. During cornering, an axially outer portion of the tread surface mainly comes into contact with a road surface.

For motorcycle tires, attempts to specify the radius of curvature of a tread surface according to a region of the tread surface have been made in order to improve performance such as cornering performance and lightness (see, for example, PATENT LITERATURE 1 below).

### CITATION LIST

### [PATENT LITERATURE]

PATENT LITERATURE 1: Japanese Laid-Open Patent Publication No. 2013-216135

### SUMMARY OF THE INVENTION

### [TECHNICAL PROBLEM]

In a motorcycle, even when the cornering force of the front tire is increased, for example, if the rear tire does not have a sufficient cornering force, the steering characteristics show an oversteering tendency. Even when the front tire has high cornering performance, if the rear tire has cornering performance higher than that of the front tire, the steering characteristics show an understeering tendency.

For example, even if measures are taken to improve the cornering performance of the front tire, depending on the rear tire to be combined, the measures taken for the front tire are not fully utilized in some cases. To improve the performance of the vehicle, tuning is necessary not only for the front tire but also for the rear tire.

The present invention has been made in view of such circumstances. An object of the present invention is to provide a motorcycle tire pair capable of improving the cornering performance of a vehicle.

### [SOLUTION TO PROBLEM]

A motorcycle tire pair according to an aspect of the present invention is a tire pair including a front tire and a rear tire. Each of the front tire and the rear tire includes a pair of beads, a carcass extending on and between a first bead and a second bead out of the pair of beads, a band located radially outward of the carcass, and a tread located radially outward of the band. The carcass includes a large number of carcass cords aligned with each other and each inclined relative to an equator plane. The band includes a band cord extending substantially in a circumferential direction. The tread has a tread surface that comes into contact with a road surface. In a meridian cross-section of each of the front tire and the rear tire, a contour line of the tread surface is equally divided into five parts. The five parts are a center part including an equator, a pair of middle parts connected to the center part, and a pair of shoulder parts connected to the middle parts. An arc that passes through the equator and both ends of the center part is a first arc, an arc that passes through an inner end and an outer end of the middle part and a center thereof is a second arc, and an arc that passes through an inner end and an outer end of the shoulder part and a center thereof is a third arc.

A ratio (R1f/R1r) of a radius R1f of the first arc of the front tire to a radius R1r of the first arc of the rear tire is a center arc index, a ratio (R2f/R2r) of a radius R2f of the second arc of the front tire to a radius R2r of the second arc of the rear tire is a middle arc index, and a ratio (R3f/R3r) of a radius R3f of the third arc of the front tire to a radius R3r of the third arc of the rear tire is a shoulder arc index. The middle arc index is larger than the center arc index, and the shoulder arc index is larger than the middle arc index.

Preferably, in the motorcycle tire pair, the center arc index is not less than 0.40 and not greater than 0.60. The shoulder arc index is not less than 0.70 and not greater than 1.10.

Preferably, in the motorcycle tire pair, a distance in a radial direction from the equator to an end of the tread surface is a tread height. A ratio of the tread height to a nominal cross-sectional width in the front tire is not less than 35% and not greater than 45%. A ratio of the tread height to a nominal cross-sectional width in the rear tire is not less than 30% and not greater than 35%.

Preferably, in the motorcycle tire pair, a ratio of the radius R1f of the first arc to a nominal cross-sectional width in the front tire is not less than 45% and not greater than 55%. A ratio of the radius R1r of the first arc to a nominal cross-sectional width in the rear tire is not less than 45% and not greater than 65%.

Preferably, in the motorcycle tire pair, no groove that intersects the equator is formed on the tread surface.

Preferably, in the motorcycle tire pair, an angle of each carcass cord with respect to the equator plane is not less than 20 degrees and not greater than 65 degrees.

More preferably, in the motorcycle tire pair, each carcass cord is a cord formed from an organic fiber.

### [ADVANTAGEOUS EFFECTS OF THE INVENTION]

According to the present invention, a motorcycle tire pair capable of improving the cornering performance of a vehicle is obtained.

### BRIEF DESCRIPTION OF DRAWINGS

FIG. 1 is a cross-sectional view showing a part of a front tire included in a motorcycle tire pair according to an embodiment of the present invention.
FIG. 2 is a schematic diagram illustrating the configuration of a carcass and a band in the front tire.
FIG. 3 is a cross-sectional view illustrating a contour line of a tread surface of the front tire.
FIG. 4 is a development showing a modification of the tread surface.
FIG. 5 is a cross-sectional view showing a part of a rear tire included in the motorcycle tire pair according to the embodiment of the present invention.
FIG. 6 is a schematic diagram illustrating the configuration of a carcass and a band in the rear tire.
FIG. 7 is a cross-sectional view illustrating a contour line of a tread surface of the rear tire.

### DETAILED DESCRIPTION

The following will describe in detail the present invention based on preferred embodiments with appropriate reference to the drawings.

A tire is fitted onto a rim. The interior of the tire is filled with air to adjust the internal pressure of the tire. In the present invention, the tire fitted on the rim is also referred to as tire-rim assembly. The tire-rim assembly includes the rim and the tire fitted on the rim.

In the present invention, a state where a tire is fitted on a normal rim, the internal pressure of the tire is adjusted to a normal internal pressure, and no load is applied to the tire is referred to as normal state.

In the present invention, unless otherwise specified, the dimensions and angles of each component of the tire are measured in the normal state. The dimensions and angles of each component in a meridian cross-section of the tire, which cannot be measured in a state where the tire is fitted on the normal rim, are measured in a cross-section of the tire obtained by cutting the tire along a plane including a rotation axis, with the distance between right and left beads being made equal to the distance between the beads in the tire that is fitted on the normal rim.

The normal rim means a rim specified in a standard on which the tire is based. The "standard rim" in the JATMA standard, the "Design Rim" in the TRA standard, and the "Measuring Rim" in the ETRTO standard are normal rims. A rim in the present invention means a normal rim unless otherwise specified.

The normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

In the present invention, the "nominal cross-sectional width" is the "nominal cross-sectional width" included in "tyre designation" specified in JIS D4203 "Motorcycle tyres - Designation and dimensions".

In the present invention, a tread portion of the tire is a portion of the tire that comes into contact with a road surface. A bead portion is a portion of the tire that is fitted to a rim. A side portion is a portion of the tire that extends between the tread portion and the bead portion. The tire includes a tread portion, a pair of bead portions, and a pair of side portions as portions thereof.

A motorcycle tire pair according to an embodiment of the present invention includes a front tire which is mounted on the front wheel of a motorcycle (not shown), and a rear tire which is mounted on the rear wheel of the motorcycle. The following will describe the front tire and the rear tire.

### [Front Tire]

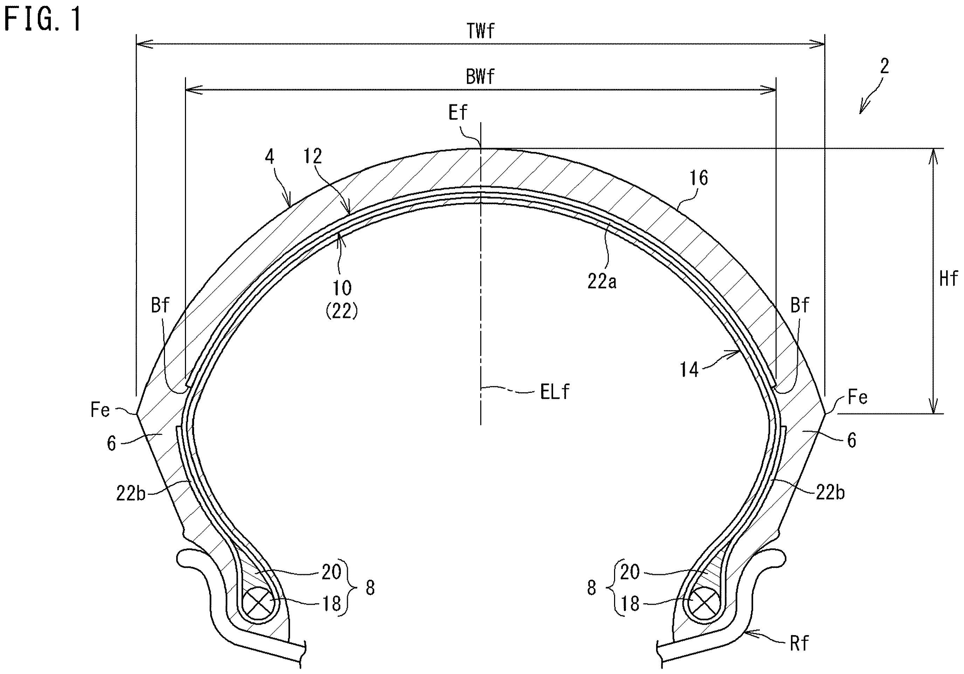

FIG. 1 shows a part of a cross-section (hereinafter, also referred to as meridian cross-section) of a front tire 2 (hereinafter, tire 2) along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. In FIG. 1, an alternate long and short dash line ELf represents the equator plane of the tire 2.

In FIG. 1, the tire 2 is fitted on a rim Rf (normal rim). The interior of the tire 2 is filled with air to adjust the internal pressure of the tire 2.

The tire 2 includes a tread 4, a pair of sidewalls 6, a pair of beads 8, a carcass 10, a band 12, and an inner liner 14.

The tread 4 is formed from a crosslinked rubber. The tread 4 is located radially outward of the band 12. The tread 4 has a tread surface 16 which comes into contact with a road surface. The tire 2 comes into contact with a road surface at the tread surface 16. As shown in FIG. 1, in the meridian cross-section, the tread surface 16 is curved such that a portion thereof at the equator plane ELf projects radially outward.

On the tread 4 of the tire 2, no groove is formed. The tire 2 is a slick tire.

In FIG. 1, a position indicated by reference sign Ef is the point of intersection of the tread surface 16 and the equator plane ELf. The point of intersection Ef corresponds to the equator of the tire 2. In the case where grooves are located on the equator plane ELf, the equator Ef is specified on the basis of a virtual outer surface (tread contour line TLf described later) obtained on the assumption that no groove is provided. The equator Ef is also the radially outer end of the tire 2.

In FIG. 1, each position indicated by reference sign Fe is an end of the tread surface 16. A length indicated by a double-headed arrow TWf is the width of the tread surface 16. The width TWf of the tread surface 16 is represented as the distance in the axial direction from a first end Fe of the tread surface 16 to a second end Fe of the tread surface 16. Each end Fe of the tread surface 16 of the tire 2 is an axially outer end of the tire 2. The width TWf of the tread surface 16 of the tire 2 is also referred to as total width (see JATMA or the like).

Each sidewall 6 is formed from a crosslinked rubber. The sidewall 6 is connected to an end of the tread 4. The sidewall 6 is located radially inward of the tread 4.

Each bead 8 is located radially inward of the sidewall 6. The bead 8 includes a core 18 and an apex 20. The core 18 includes a steel wire which is not shown. The apex 20 is located radially outward of the core 18. The apex 20 is tapered outward. The apex 20 is formed from a crosslinked rubber that has high stiffness.

The carcass 10 is located inward of the tread 4 and the pair of sidewalls 6. The carcass 10 extends on and between a first bead 8 and a second bead 8 out of the pair of beads 8.

The carcass 10 includes at least one carcass ply 22. The carcass 10 of the tire 2 is composed of one carcass ply 22.

The carcass ply 22 includes a ply body 22a which extends on and between a first core 18 and a second core 18, and a pair of turned-up portions 22b which are connected to the ply body 22a and turned up around the respective cores 18 from the inner side toward the outer side in the axial direction.

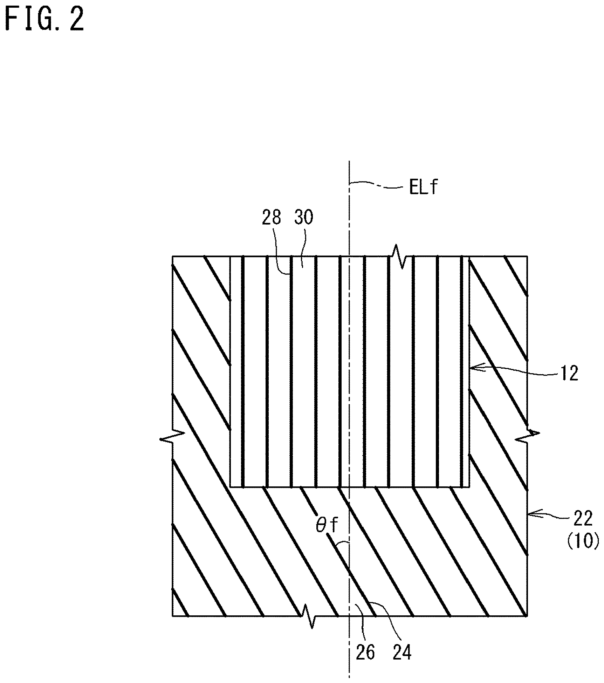

FIG. 2 shows the configuration of the carcass 10 together with the band 12 described later. In FIG. 2, the right-left direction is the axial direction of the tire 2, and the up-down direction is the circumferential direction of the tire 2. The direction perpendicular to the surface of the drawing sheet of FIG. 2 is the radial direction of the tire 2. The front side of the drawing sheet of FIG. 2 is the outer side in the radial direction, and the back side thereof is the inner side in the radial direction.

As shown in FIG. 2, the carcass ply 22 included in the carcass 10 includes a large number of carcass cords 24 aligned with each other. In FIG. 2, for convenience of description, each carcass cord 24 is represented by a solid line, but the carcass cords 24 are covered with a topping rubber 26.

Each carcass cord 24 is inclined relative to the equator plane ELf. In FIG. 2, an angle indicated by reference sign θf is the angle (inclination angle θf) of each carcass cord 24 in the carcass ply 22 with respect to the equator plane ELf. In the tire 2, the inclination angle θf of each carcass cord 24 is not less than 20 degrees and not greater than 65 degrees.

In the tire 2, a cord formed from an organic fiber (organic fiber cord) can be used as each carcass cord 24. Examples of the organic fiber include nylon fibers, rayon fibers, polyester fibers, and aramid fibers. In the tire 2, each carcass cord 24 may be a cord formed from an inorganic fiber. In this case, examples of the inorganic fiber include glass fibers and carbon fibers.

In the tire 2, from the viewpoint of well-balancing strength and steering stability, each carcass cord 24 is preferably an organic fiber cord.

The band 12 is located radially outward of the carcass 10. The band 12 is stacked on the carcass 10 on the radially inner side of the tread 4. The band 12 is located between the tread 4 and the carcass 10.

The band 12 includes a helically wound band cord 28. In FIG. 2, for convenience of description, the band cord 28 is represented by a solid line, but the band cord 28 is covered with a topping rubber 30. In the tire 2, the band cord 28 extends substantially in the circumferential direction. Specifically, the angle of the band cord 28 with respect to the circumferential direction is not greater than 5°. The band 12 is also referred to as jointless band.

In the tire 2, a cord formed from an organic fiber (organic fiber cord) can be used as the band cord 28. Examples of the organic fiber include nylon fibers, rayon fibers, polyester fibers, and aramid fibers. In the tire 2, the band cord 28 may be a cord formed from an inorganic fiber. In this case, examples of the inorganic fiber include glass fibers and carbon fibers. The band cord 28 may be a steel cord.

In FIG. 1, each position indicated by reference sign Bf is an end of the band 12. A length indicated by a double-headed arrow BWf is the width of the band 12. The width BWf of the band 12 is represented as the distance in the axial direction from a first end Bf of the band 12 to a second end Bf of the band 12. In the tire 2, the ratio (BWf/TWf) of the width BWf of the band 12 to the width TWf of the tread surface 16 is not less than 0.80 and not greater than 0.95.

The inner liner 14 is located inward of the carcass 10. The inner liner 14 forms an inner surface of the tire 2. The inner liner 14 is formed from a crosslinked rubber that has a low gas permeability coefficient. The inner liner 14 maintains the internal pressure of the tire 2.

In FIG. 1, a length indicated by a double-headed arrow Hf is a tread height. The tread height Hf is the distance in the radial direction from the equator Ef to the end Fe of the tread surface 16.

In the tire 2, the ratio of the tread height Hf to a nominal cross-sectional width is preferably not less than 35% and not greater than 45%.

When this ratio is set to be not less than 35%, a sufficient cornering force is obtained in the tire 2. From this viewpoint, this ratio is more preferably not less than 37% and further preferably not less than 39%.

When this ratio is set to be not greater than 45%, sufficient stiffness is obtained in each side portion of the tire 2. From this viewpoint, this ratio is more preferably not greater than 43% and further preferably not greater than 42%.

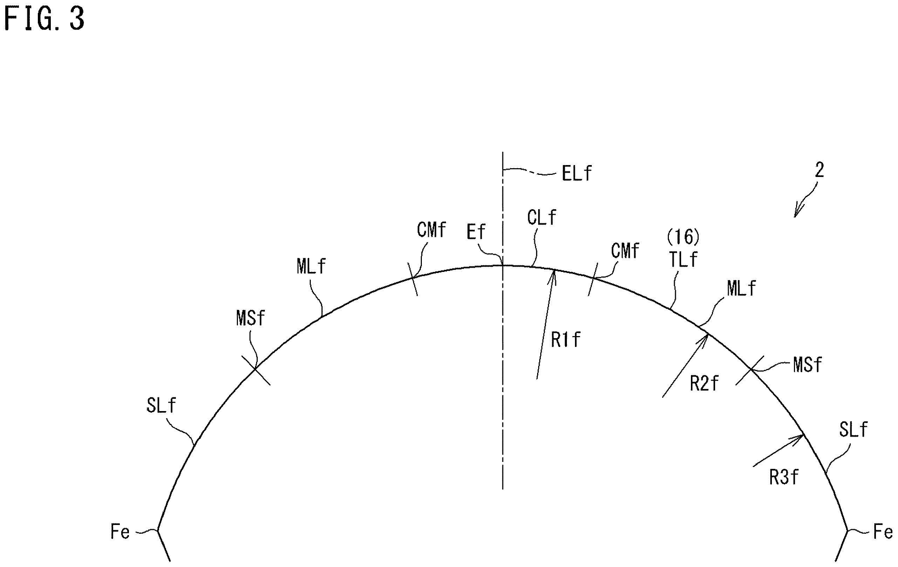

FIG. 3 shows a contour line of the tire 2 in the meridian cross-section. The contour line of the tire 2 is obtained by measuring the outer surface shape of the tire 2 in the normal state, for example, using a displacement sensor.

Of the contour line, a portion from the first end Fe of the tread surface 16 to the second end Fe thereof is a contour line TLf of the tread surface 16 (hereinafter, tread contour line TLf). For example, in the case where a groove is formed on the tread 4, the contour line of a portion on which the groove is formed is represented by a virtual contour line obtained on the assumption that no groove is formed thereon.

A contour line of a tread surface in a rear tire described later is also obtained in the same manner as for the contour line TLf.

In FIG. 3, the tread contour line TLf has a shape that is symmetrical about the equator plane ELf. In the tire 2, the tread contour line TLf is equally divided into five parts.

Among the five parts, a part located at the center in the axial direction is a center part CLf. The center part CLf includes the equator Ef. Parts located axially outward of the center part CLf are middle parts MLf. Each middle part MLf is connected to the center part CLf. Parts located axially outward of the middle parts MLf are shoulder parts SLf. Each shoulder part SLf is connected to the middle part MLf.

The five parts are the center part CLf including the equator Ef, a pair of the middle parts MLf connected to the center part CLf, and a pair of the shoulder parts SLf connected to the middle parts MLf.

In FIG. 3, each position indicated by reference sign CMf corresponds to the boundary between the center part CLf and the middle part MLf. The boundary CMf is an end of the center part CLf and is the inner end of the middle part MLf. Each position indicated by reference sign MSf corresponds to the boundary between the middle part MLf and the shoulder part SLf. The boundary MSf is the outer end of the middle part MLf and is the inner end of the shoulder part SLf. The outer end of the shoulder part SLf is the end Fe of the tread surface 16. The shoulder part SLf includes the end Fe of the tread surface 16.

In the tire 2, an arc that passes through the equator Ef and both ends CMf of the center part CLf is a first arc. In FIG. 3, an arrow R1f indicates the radius of the first arc. Although not shown, the center of the first arc is located on the equator plane ELf.

An arc that passes through the inner end CMf and the outer end MSf of the middle part MLf and the center thereof is a second arc. In FIG. 3, an arrow R2f indicates the radius of the second arc. The center of the middle part MLf is the point of intersection of the middle part MLf and the perpendicular bisector of a line segment connecting the inner end CMf and the outer end MSf.

An arc that passes through the inner end MSf and the outer end Fe of the shoulder part SLf and the center thereof is a third arc. In FIG. 3, an arrow R3f indicates the radius of the third arc. The center of the shoulder part SLf is the point of intersection of the shoulder part SLf and the perpendicular bisector of a line segment connecting the inner end MSf and the outer end Fe.

In the tire 2, the ratio of the radius R1f of the first arc to the nominal cross-sectional width is preferably not less than 45% and not greater than 55%.

When this ratio is set to be not less than 45%, the tire 2 is inhibited from tilting more than expected, at the beginning of cornering. From this viewpoint, this ratio is more preferably not less than 48%.

When this ratio is set to be not greater than 55%, initial responsiveness can be improved. From this viewpoint, this ratio is more preferably not greater than 52%.

In the tire 2, the ratio (R2f/R1f) of the radius R2f of the second arc to the radius R1f of the first arc is preferably not less than 0.88 and not greater than 1.49.

When the ratio (R2f/R1f) is set to be not less than 0.88, the tire 2 is effectively inhibited from tilting more than expected, at the beginning of cornering. From this viewpoint, the ratio (R2f/R1f) is more preferably not less than 0.98.

When the ratio (R2f/R1f) is set to be not greater than 1.49, a sufficient cornering force is obtained in the tire 2. From this viewpoint, the ratio (R2f/R1f) is more preferably not greater than 1.30.

In the tire 2, the ratio (R3f/R2f) of the radius R3f of the third arc to the radius R2f of the second arc is preferably not less than 0.96 and not greater than 2.07.

When the ratio (R3f/R2f) is set to be not less than 0.96, the tire 2 is effectively inhibited from tilting more than expected, at the beginning of cornering. From this viewpoint, the ratio (R3f/R2f) is more preferably not less than 0.98.

When the ratio (R3f/R2f) is set to be not greater than 2.07, a sufficient cornering force is obtained in the tire 2. From this viewpoint, the ratio (R3f/R2f) is more preferably not greater than 1.33 and further preferably not greater than 1.23.

As described above, no groove is formed on the tread surface 16 of the tire 2. No groove that intersects the equator Ef is formed on the tread surface 16.

The tire 2 has higher stiffness in a portion at the equator plane ELf which mainly comes into contact with a road surface during straight running, than a tire in which a groove intersecting the equator is formed. The tire 2 can quickly shift from straight running to cornering, and excellent cornering performance of the tire 2 is sufficiently exhibited.

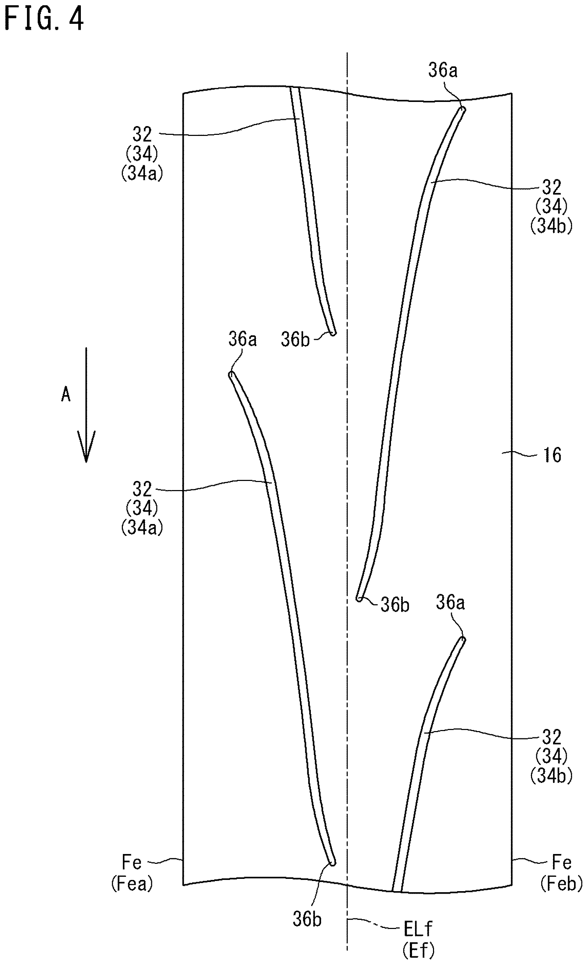

FIG. 4 shows a modification of the tread surface 16. As shown in FIG. 4, in this tire 2, grooves can be formed on the tread surface 16. By forming the grooves on the tread surface 16, for example, a tread pattern is formed as shown in FIG. 4.

In FIG. 4, the right-left direction is the axial direction of the tire 2, and the up-down direction is the circumferential direction of the tire 2. The direction perpendicular to the surface of the drawing sheet of FIG. 4 is the radial direction of the tire 2.

In FIG. 4, an arrow A indicates the rotation direction of the tire 2. The tread surface 16 comes into contact with a road surface from the lower side to the upper side of the surface of the drawing sheet of FIG. 4. The lower side of the surface of the drawing sheet is a leading side, and the upper side of the surface of the drawing sheet is a trailing side.

The tread pattern in FIG. 4 is an example of a tread pattern that can be formed on the tread surface 16 of the tire 2. The tread pattern that can be formed on the tread surface 16 of the tire 2 will be described with reference to FIG. 4.

On the tread surface 16 shown in FIG. 4, inclined grooves 34 are formed as grooves 32. Each inclined groove 34 is inclined relative to the circumferential direction. A trailing side end 36a of the inclined groove 34 is located on the end Fe side of the tread surface 16. A leading side end 36b of the inclined groove 34 is located on the equator Ef side.

The inclined grooves 34 include first inclined grooves 34a formed between the equator Ef and a first end Fea of the tread surface 16, and second inclined grooves 34b formed between the equator Ef and a second end Feb of the tread surface 16. On the tread surface 16, a plurality of the first inclined grooves 34a are arranged in the circumferential direction at a constant pitch. A plurality of the second inclined grooves 34b are arranged in the circumferential direction at a constant pitch. The first inclined grooves 34a and the second inclined grooves 34b are alternately arranged in the circumferential direction.

As shown in FIG. 4, the entirety of each first inclined groove 34a is located between the equator Ef and the end Fea of the tread surface 16. The entirety of each second inclined groove 34b is also located between the equator Ef and the end Feb of the tread surface 16.

In this tread surface 16 as well, no groove that intersects the equator Ef is formed. Therefore, in this case as well, the tire 2 has higher stiffness in a portion at the equator plane ELf which mainly comes into contact with a road surface during straight running, than a tire in which a groove intersecting the equator is formed. The tire 2 can quickly shift from straight running to cornering, and excellent cornering performance of the tire 2 is sufficiently exhibited.

From the viewpoint of being able to contribute to improvement of the cornering performance of a vehicle, in the tire 2, preferably, no groove that intersects the equator Ef is formed on the tread surface 16.

### [Rear Tire]

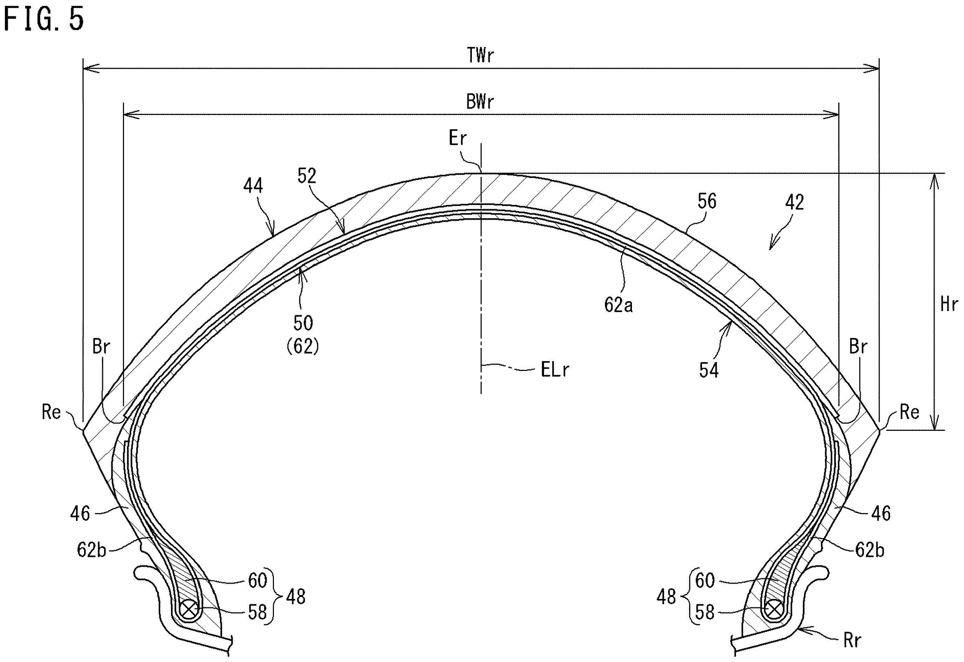

FIG. 5 shows a part of a cross-section (hereinafter, also referred to as meridian cross-section) of a rear tire 42 (hereinafter, tire 42) along a plane including the rotation axis of the tire 42. In FIG. 5, the right-left direction is the axial direction of the tire 42, and the up-down direction is the radial direction of the tire 42. The direction perpendicular to the surface of the drawing sheet of FIG. 5 is the circumferential direction of the tire 42. In FIG. 5, an alternate long and short dash line ELr represents the equator plane of the tire 42.

In FIG. 5, the tire 42 is fitted on a rim Rr (normal rim). The interior of the tire 42 is filled with air to adjust the internal pressure of the tire 42.

The tire 42 includes a tread 44, a pair of sidewalls 46, a pair of beads 48, a carcass 50, a band 52, and an inner liner 54.

The tread 44 is formed from a crosslinked rubber. The tread 44 is located radially outward of the band 52. The tread 44 has a tread surface 56 which comes into contact with a road surface. The tire 42 comes into contact with a road surface at the tread surface 56. As shown in FIG. 5, in the meridian cross-section, the tread surface 56 is curved such that a portion thereof at the equator plane ELr projects radially outward.

On the tread 44 of the tire 42, no groove is formed. The tire 42 is a slick tire.

In FIG. 5, a position indicated by reference sign Er is the point of intersection of the tread surface 56 and the equator plane ELr. The point of intersection Er corresponds to the equator of the tire 42. In the case where a groove is located on the equator plane ELr, the equator Er is specified on the basis of a tread contour line TLr described later. The equator Er is also the radially outer end of the tire 42.

In FIG. 5, each position indicated by reference sign Re is an end of the tread surface 56. A length indicated by a double-headed arrow TWr is the width of the tread surface 56. The width TWr of the tread surface 56 is represented as the distance in the axial direction from a first end Re of the tread surface 56 to a second end Re of the tread surface 56. Each end Re of the tread surface 56 of the tire 42 is an axially outer end of the tire 42. The width TWr of the tread surface 56 of the tire 42 is also referred to as total width (see JATMA or the like).

Each sidewall 46 is formed from a crosslinked rubber. The sidewall 46 is connected to an end of the tread 44. The sidewall 46 is located radially inward of the tread 44.

Each bead 48 is located radially inward of the sidewall 46. The bead 48 includes a core 58 and an apex 60. The core 58 includes a steel wire which is not shown. The apex 60 is located radially outward of the core 58. The apex 60 is tapered outward. The apex 60 is formed from a crosslinked rubber that has high stiffness.

The carcass 50 is located inward of the tread 44 and the pair of sidewalls 46. The carcass 50 extends on and between a first bead 48 and a second bead 48 out of the pair of beads 48.

The carcass 50 includes at least one carcass ply 62. The carcass 50 of the tire 42 is composed of one carcass ply 62.

The carcass ply 62 includes a ply body 62a which extends on and between a first core 58 and a second core 58, and a pair of turned-up portions 62b which are connected to the ply body 62a and turned up around the respective cores 58 from the inner side toward the outer side in the axial direction.

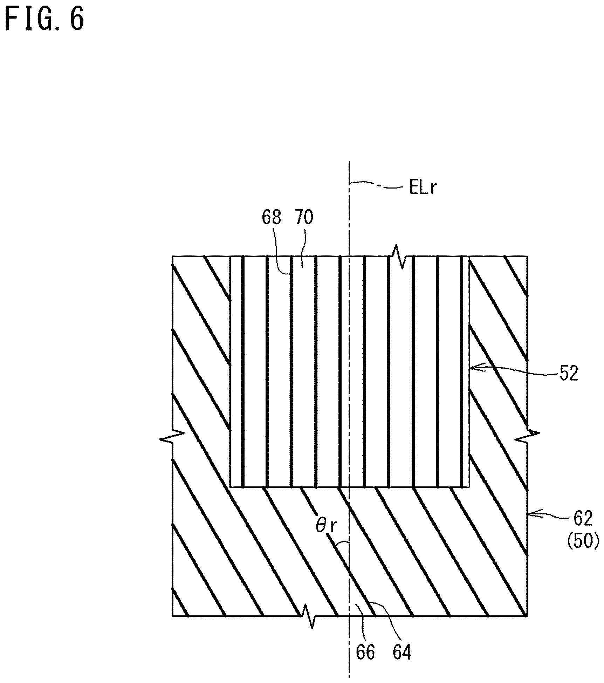

FIG. 6 shows the configuration of the carcass 50 together with the band 52 described later. In FIG. 6, the right-left direction is the axial direction of the tire 42, and the up-down direction is the circumferential direction of the tire 42. The direction perpendicular to the surface of the drawing sheet of FIG. 6 is the radial direction of the tire 42. The front side of the drawing sheet of FIG. 6 is the outer side in the radial direction, and the back side thereof is the inner side in the radial direction.

As shown in FIG. 6, the carcass ply 62 included in the carcass 50 includes a large number of carcass cords 64 aligned with each other. In FIG. 6 as well, for convenience of description, each carcass cord 64 is represented by a solid line, but the carcass cords 64 are covered with a topping rubber 66.

Each carcass cord 64 is inclined relative to the equator plane ELr. In FIG. 6, an angle indicated by reference sign θr is the angle (inclination angle θr) of each carcass cord 64 in the carcass ply 62 with respect to the equator plane ELr. In the tire 42, the inclination angle θr of each carcass cord 64 is not less than 20 degrees and not greater than 65 degrees.

In the tire 42, a cord formed from an organic fiber (organic fiber cord) can be used as each carcass cord 64. Examples of the organic fiber include nylon fibers, rayon fibers, polyester fibers, and aramid fibers. In the tire 42, each carcass cord 64 may be a cord formed from an inorganic fiber. In this case, examples of the inorganic fiber include glass fibers and carbon fibers.

In the tire 42, from the viewpoint of well-balancing strength and steering stability, each carcass cord 64 is preferably an organic fiber cord.

The band 52 is located radially outward of the carcass 50. The band 52 is stacked on the carcass 50 on the radially inner side of the tread 44. The band 52 is located between the tread 44 and the carcass 50.

The band 52 includes a helically wound band cord 68. In FIG. 6, for convenience of description, the band cord 68 is represented by a solid line, but the band cord 68 is covered with a topping rubber 70. In the tire 42, the band cord 68 extends substantially in the circumferential direction. Specifically, the angle of the band cord 68 with respect to the circumferential direction is not greater than 5°. The band 52 is also referred to as jointless band.

In the tire 42, a cord formed from an organic fiber (organic fiber cord) can be used as the band cord 68. Examples of the organic fiber include nylon fibers, rayon fibers, polyester fibers, and aramid fibers. In the tire 42, the band cord 68 may be a cord formed from an inorganic fiber. In this case, examples of the inorganic fiber include glass fibers and carbon fibers. The band cord 68 may be a steel cord.

In FIG. 5, each position indicated by reference sign Br is an end of the band 52. A length indicated by a double-headed arrow BWr is the width of the band 52. The width BWr of the band 52 is represented as the distance in the axial direction from a first end Br of the band 52 to a second end Br of the band 52. In the tire 42, the ratio (BWr/TWr) of the width BWr of the band 52 to the width TWr of the tread surface 56 is not less than 0.80 and not greater than 0.95.

The inner liner 54 is located inward of the carcass 50. The inner liner 54 forms an inner surface of the tire 42. The inner liner 54 is formed from a crosslinked rubber that has a low gas permeability coefficient. The inner liner 54 maintains the internal pressure of the tire 42.

In FIG. 5, a length indicated by a double-headed arrow Hr is a tread height. The tread height Hr is the distance in the radial direction from the equator Er to the end Re of the tread surface 56.

In the tire 42, the ratio of the tread height Hr to a nominal cross-sectional width is preferably not less than 30% and not greater than 35%.

When this ratio is set to be not less than 30%, a sufficient cornering force is obtained in the tire 42. From this viewpoint, this ratio is more preferably not less than 32%.

When this ratio is set to be not greater than 35%, sufficient stiffness is obtained in each side portion of the tire 42. From this viewpoint, this ratio is more preferably not greater than 34%.

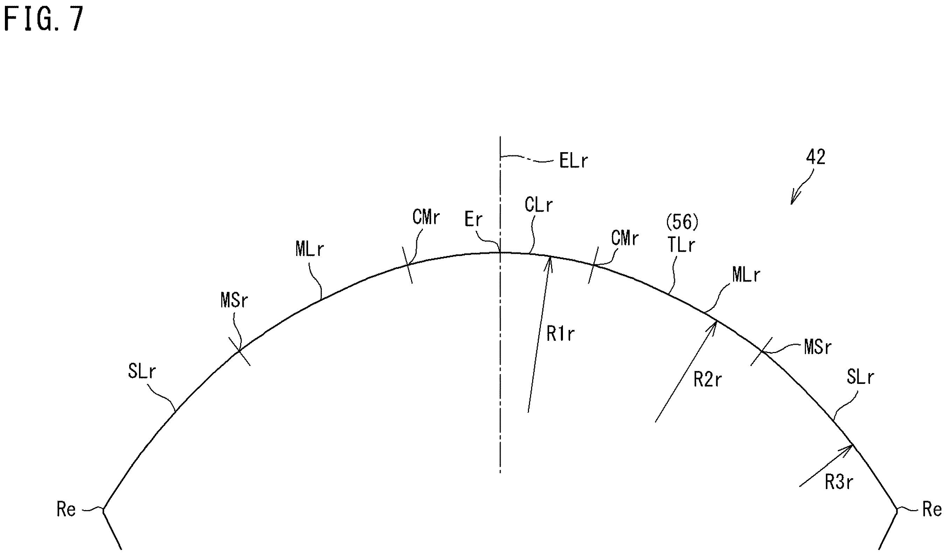

FIG. 7 shows a contour line of the rear tire 42 in the meridian cross-section. Of the contour line shown in FIG. 7, a portion from the first end Re of the tread surface 56 to the second end Re thereof is a contour line TLr of the tread surface 56 (hereinafter, tread contour line TLr).

In FIG. 7, the tread contour line TLr has a shape that is symmetrical about the equator plane ELr. In the tire 42, the tread contour line TLr is equally divided into five parts.

Among the five parts, a part located at the center in the axial direction is a center part CLr. The center part CLr includes the equator Er. Parts located axially outward of the center part CLr are middle parts MLr. Each middle part MLr is connected to the center part CLr. Parts located axially outward of the middle parts MLr are shoulder parts SLr. Each shoulder part SLr is connected to the middle part MLr.

The five parts are the center part CLr including the equator Er, a pair of the middle parts MLr connected to the center part CLr, and a pair of the shoulder parts SLr connected to the middle parts MLr.

In FIG. 7, each position indicated by reference sign CMr corresponds to the boundary between the center part CLr and the middle part MLr. The boundary CMr is an end of the center part CLr and is the inner end of the middle part MLr. Each position indicated by reference sign MSr corresponds to the boundary between the middle part MLr and the shoulder part SLr. The boundary MSr is the outer end of the middle part MLr and is the inner end of the shoulder part SLr. The outer end of the shoulder part SLr is the end Re of the tread surface 56. The shoulder part SLr includes the end Re of the tread surface 56.

In the tire 42, an arc that passes through the equator Er and both ends CMr of the center part CLr is a first arc. In FIG. 7, an arrow R1r indicates the radius of the first arc. Although not shown, the center of the first arc is located on the equator plane ELr.

An arc that passes through the inner end CMr and the outer end MSr of the middle part MLr and the center thereof is a second arc. In FIG. 7, an arrow R2r indicates the radius of the second arc. The center of the middle part MLr is the point of intersection of the middle part MLr and the perpendicular bisector of a line segment connecting the inner end CMr and the outer end MSr.

An arc that passes through the inner end MSr and the outer end Re of the shoulder part SLr and the center thereof is a third arc. In FIG. 7, an arrow R3r indicates the radius of the third arc. The center of the shoulder part SLr is the point of intersection of the shoulder part SLr and the perpendicular bisector of a line segment connecting the inner end MSr and the outer end Re.

In the tire 42, the ratio of the radius R1r of the first arc to the nominal cross-sectional width is preferably not less than 45% and not greater than 65%.

When this ratio is set to be not less than 45%, the rear tire 42 is inhibited from tilting more than expected, at the beginning of cornering. From this viewpoint, this ratio is more preferably not less than 54%.

When this ratio is set to be not greater than 65%, initial responsiveness can be improved. From this viewpoint, this ratio is more preferably not greater than 62%.

In the tire 42, the ratio (R2r/R1r) of the radius R2r of the second arc to the radius R1r of the first arc is preferably not less than 0.81 and not greater than 1.36.

When the ratio (R2r/R1r) is set to be not less than 0.81, the tire 42 is effectively inhibited from tilting more than expected, at the beginning of cornering. From this viewpoint, the ratio (R2r/R1r) is more preferably not less than 0.83.

When the ratio (R2r/R1r) is set to be not greater than 1.36, a sufficient cornering force is obtained in the tire 42. From this viewpoint, the ratio (R2r/R1r) is more preferably not greater than 1.09 and further preferably not greater than 0.92.

In the tire 42, the ratio (R3r/R2r) of the radius R3r of the third arc to the radius R2r of the second arc is preferably not less than 0.62 and not greater than 1.26.

When the ratio (R3r/R2r) is set to be not less than 0.62, the tire 42 is effectively inhibited from tilting more than expected, at the beginning of cornering. From this viewpoint, the ratio (R3r/R2r) is more preferably not less than 0.81.

When the ratio (R3r/R2r) is set to be not greater than 1.26, a sufficient cornering force is obtained in the tire 42. From this viewpoint, the ratio (R3r/R2r) is more preferably not greater than 1.08 and further preferably not greater than 0.96.

As described above, no groove is formed on the tread surface 56 of the tire 42. No groove that intersects the equator Er is formed on the tread surface 56.

The tire 42 has higher stiffness in a portion at the equator plane ELr which mainly comes into contact with a road surface during straight running, than a tire in which a groove intersecting the equator is formed. The tire 42 can quickly shift from straight running to cornering, and excellent cornering performance of the tire 42 is sufficiently exhibited.

In the tire 42 as well, similar to the tread surface 16 of the above-described front tire 2, grooves can be formed on the tread surface 56. In this case, similar to the tread surface 16, a tread pattern (not shown) is formed such that no groove that intersects the equator Er is included. The tire 42 has higher stiffness in a portion at the equator plane ELr which mainly comes into contact with a road surface during straight running, than a tire in which a groove intersecting the equator is formed. The tire 42 can quickly shift from straight running to cornering, and excellent cornering performance of the tire 42 is sufficiently exhibited.

In the tire 42, from the viewpoint of being able to contribute to improvement of the cornering performance of a vehicle, preferably, no groove that intersects the equator Er is formed on the tread surface 56.

### [Tire Pair]

A tire pair according to an embodiment of the present invention includes the front tire 2 and the rear tire 42 which are described above. In the tire pair, in order to effectively contribute to improvement of the cornering performance of a vehicle, the tread contour line TLf of the front tire 2 and the tread contour line TLr of the rear tire 42 are mainly set so as to have excellent balance therebetween.

In the tire pair, a center arc index Ac, a middle arc index Am, and a shoulder arc index As which are described below are used in order to appropriately set the tread contour line TLf and the tread contour line TLr.

The center arc index Ac is the ratio (R1f/R1r) of the radius R1f of the first arc of the front tire 2 to the radius R1r of the first arc of the rear tire 42.

The middle arc index Am is the ratio (R2f/R2r) of the radius R2f of the second arc of the front tire 2 to the radius R2r of the second arc of the rear tire 42.

The shoulder arc index As is the ratio (R3f/R3r) of the radius R3f of the third arc of the front tire 2 to the radius R3r of the third arc of the rear tire 42.

In the tire pair, the middle arc index Am is larger than the center arc index Ac, and the shoulder arc index As is larger than the middle arc index Am.

In the tire pair, the camber thrust of the rear tire 42 is lowered at the beginning of cornering. The tire pair can easily change the direction of the vehicle body.

At the beginning of cornering, the cornering performance of the front tire 2 is improved as compared to the cornering performance of the rear tire 42, so that, in the vehicle, the front tire 2 turns earlier than the rear tire 42. The vehicle can maintain the cornering performance thereof without the steering characteristics thereof showing any oversteering tendency.

In the secondary cornering, the difference between the cornering performance of the front tire 2 and the cornering performance of the rear tire 42 is reduced to be small. With the tire pair, good stability is maintained.

Since the direction of the vehicle body can be sufficiently changed at the beginning of cornering, the vehicle can ensure sufficient cornering performance, and solve the lack of a cornering force in the secondary cornering. Accordingly, the vehicle can ensure high cornering performance and stability.

With the tire pair, the cornering force at the beginning of cornering is improved, and the cornering performance and the stability in the secondary cornering are improved.

The tire pair can improve the cornering performance of the vehicle.

In the tire pair, the center arc index Ac is preferably not less than 0.40 and not greater than 0.60. Accordingly, with the tire pair, the cornering force at the beginning of cornering is improved, and the cornering performance and the stability in the secondary cornering are improved. The tire pair can improve the cornering performance of the vehicle. From this viewpoint, the center arc index Ac is more preferably not less than 0.50 and further preferably not less than 0.51. The center arc index Ac is more preferably not greater than 0.58.

In the tire pair, the shoulder arc index As is preferably not less than 0.70 and not greater than 1.10. Accordingly, with the tire pair, the cornering force at the beginning of cornering is improved, and the cornering performance and the stability in the secondary cornering are improved. The tire pair can improve the cornering performance of the vehicle. From this viewpoint, the shoulder arc index As is more preferably not less than 0.80 and further preferably not less than 0.83. The shoulder arc index As is more preferably not greater than 0.88.

In the tire pair, from the viewpoint of being able to improve the cornering performance of the vehicle, more preferably, the center arc index Ac is not less than 0.40 and not greater than 0.60, and the shoulder arc index As is not less than 0.70 and not greater than 1.10.

As described above, in the front tire 2, the ratio of the tread height Hf to the nominal cross-sectional width is preferably not less than 35% and not greater than 45%. In the rear tire 42, the ratio of the tread height Hr to the nominal cross-sectional width is preferably not less than 30% and not greater than 35%.

In the tire pair, from the viewpoint of being able to improve the cornering performance of the vehicle, more preferably, in the front tire 2, the ratio of the tread height Hf to the nominal cross-sectional width is not less than 35% and not greater than 45%, and in the rear tire 42, the ratio of the tread height Hf to the nominal cross-sectional width is not less than 30% and not greater than 35%.

As described above, in the front tire 2, the ratio of the radius R1f of the first arc to the nominal cross-sectional width is preferably not less than 45% and not greater than 55%. In the rear tire 42, the ratio of the radius R1r of the first arc to the nominal cross-sectional width is preferably not less than 45% and not greater than 65%.

In the tire pair, from the viewpoint of being able to improve the cornering performance of the vehicle, more preferably, in the front tire 2, the ratio of the radius R1f of the first arc to the nominal cross-sectional width is not less than 45% and not greater than 55%, and in the rear tire 42, the ratio of the radius R1r of the first arc to the nominal cross-sectional width is not less than 45% and not greater than 65%.

As described above, according to the present invention, a motorcycle tire pair capable of improving the cornering performance of a vehicle is obtained.

### EXAMPLES

The following will describe the present invention in further detail by means of examples.

### [Example 1]

A motorcycle tire pair including a front tire (120/70ZR17) having the basic structure shown in FIG. 1 and having specifications shown in Table 1 below and a rear tire (190/55ZR17) having the basic structure shown in FIG. 5 and having specifications shown in Table 1, was obtained. The nominal cross-sectional width Wf of the front tire was 120, and the nominal cross-sectional width Wr of the rear tire was 190.

The front tire and the rear tire of Example 1 are slick tires. No groove that intersects the equator is formed on each of the tread surfaces of the front tire and the rear tire. This is indicated as "Y" in the cell for "Groove" in Table 1.

### [Examples 2 to 9 and Comparative Examples 1 to 4]

The radius R1f of the first arc, the radius R2f of the second arc, the radius R3f of the third arc, and the tread height Hf of the front tire, and the radius R1r of the first arc, the radius R2r of the second arc, the radius R3r of the third arc, the nominal cross-sectional width Wr, and the tread height Hr of the rear tire were adjusted such that the ratio (R2f/R1f), the ratio (R3f/R2f), the ratio (R1f/Wf), the ratio (Hf/Wf), the ratio (R2r/R1r), the ratio (R3r/R2r), the ratio (R1r/Wr), the ratio (Hr/Wr), the center arc index Ac, the middle arc index Am, and the shoulder arc index As were set as shown in Table 1 and Table 2 below, and tire pairs of Examples 2 to 9 and Comparative Examples 1 to 4 were obtained.

Grooves that intersect the equator were provided on each of the tread surfaces of Examples 2, 8, and 9 and Comparative Examples 1 and 4. This is indicated as "N" in the cells for "Groove" in Table 1 and Table 2.

The tire sizes of the rear tires of Examples 3 and 4 and Comparative Example 1 were 200/55ZR17. The tire size of the rear tire of Comparative Example 4 was 180/55ZR17.

The configurations other than the configurations shown in Table 1 and Table 2 were set to the same configurations as in Example 1.

### [Performance Evaluation]

A front tire and a rear tire were each fitted onto a normal rim and inflated with air to adjust the tire internal pressure to a normal internal pressure.

The front tire and the rear tire were mounted to a large motorcycle (engine displacement = 1000 cc). The motorcycle was caused to run on a test course having a dry asphalt road surface, and sensory evaluations (10-point method) were made by a test rider.

The items to be evaluated are initial cornering performance, transient characteristics, and cornering performance and stability during secondary cornering.

The evaluation results are indicated as indexes in Table 1 and Table 2 below. A higher value indicates a better result.

**[Table 1]**

| | | Comp. Ex. 1 | Comp. Ex. 2 | Comp. Ex. 3 | Comp. Ex. 4 | Ex. 2 | Ex. 1 | Ex. 3 |
|---|---|---|---|---|---|---|---|---|
| R1f [mm] | | 60.6 | 56.7 | 59.0 | 60.9 | 49.0 | 58.0 | 62.4 |
| R2f [mm] | | 60.6 | 50.0 | 61.2 | 57.0 | 73.1 | 75.5 | 61.4 |
| R3f [mm] | | 60.6 | 80.0 | 64.0 | 118.0 | 97.1 | 93.0 | 60.4 |
| R2f/R1f | | 1.00 | 0.88 | 1.04 | 0.94 | 1.49 | 1.30 | 0.98 |
| R3f/R2f | | 1.00 | 1.60 | 1.05 | 2.07 | 1.33 | 1.23 | 0.98 |
| R1r [mm] | | 102.3 | 90.0 | 59.0 | 107.0 | 130.7 | 123.0 | 107.8 |
| R2r [mm] | | 102.3 | 80.0 | 80.0 | 103.2 | 142.1 | 106.5 | 90.4 |
| R3r [mm] | | 102.3 | 101.0 | 101.0 | 64.0 | 153.5 | 90.0 | 73.0 |
| R2r/R1r | | 1.00 | 0.89 | 1.36 | 0.96 | 1.09 | 0.87 | 0.84 |
| R3r/R2r | | 1.00 | 1.26 | 1.26 | 0.62 | 1.08 | 0.85 | 0.81 |
| Ac [-] | | 0.59 | 0.63 | 1.00 | 0.57 | 0.37 | 0.47 | 0.58 |
| Am [-] | | 0.59 | 0.63 | 0.77 | 0.55 | 0.51 | 0.71 | 0.68 |
| As [-] | | 0.59 | 0.79 | 0.63 | 1.84 | 0.63 | 1.03 | 0.83 |
| R1f/Wf [%] | | 50.5 | 47.3 | 49.2 | 50.8 | 40.8 | 48.3 | 52.0 |
| R1r/Wr [%] | | 51.2 | 47.4 | 31.1 | 59.4 | 68.8 | 64.7 | 53.9 |
| Hf/Wf [%] | | 39.2 | 40.0 | 42.0 | 39.6 | 42.8 | 42.2 | 39.3 |
| Hr/Wr [%] | | 30.0 | 28.9 | 33.3 | 31.7 | 28.9 | 30.2 | 33.5 |
| Groove | | N | Y | Y | N | N | Y | Y |
| Initial cornering performance | | 3.0 | 2.7 | 2.9 | 3.1 | 6.5 | 8.2 | 9.3 |
| Transient characteristics | | 3.3 | 3.0 | 3.5 | 1.9 | 8.1 | 7.6 | 8.8 |
| Secondary cornering performance | Cornering performance | 4.0 | 2.6 | 2.0 | 3.7 | 6.9 | 8.5 | 9.1 |
| | Stability | 3.5 | 3.2 | 2.1 | 4.1 | 7.0 | 7.8 | 8.2 |

**[Table 2]**

| | | Ex. 4 | Ex. 5 | Ex. 6 | Ex. 7 | Ex. 8 | Ex. 9 |
|---|---|---|---|---|---|---|---|
| R1f [mm] | | 62.4 | 58.0 | 59.0 | 62.4 | 58.0 | 59.0 |
| R2f [mm] | | 61.4 | 75.5 | 61.0 | 61.4 | 75.5 | 61.0 |
| R3f [mm] | | 60.4 | 93.0 | 64.0 | 60.4 | 93.0 | 64.0 |
| R2f/R1f | | 0.98 | 1.30 | 1.03 | 0.98 | 1.30 | 1.03 |
| R3f/R2f | | 0.98 | 1.23 | 1.05 | 0.98 | 1.23 | 1.05 |
| R1r [mm] | | 123.0 | 123.7 | 107.8 | 130.1 | 123.7 | 107.8 |
| R2r [mm] | | 112.7 | 102.8 | 90.4 | 116.3 | 102.8 | 90.4 |
| R3r [mm] | | 107.8 | 84.2 | 73.0 | 102.5 | 84.2 | 73.0 |
| R2r/R1r | | 0.92 | 0.83 | 0.84 | 0.89 | 0.83 | 0.84 |
| R3r/R2r | | 0.96 | 0.82 | 0.81 | 0.88 | 0.82 | 0.81 |
| Ac [-] | | 0.51 | 0.47 | 0.55 | 0.48 | 0.47 | 0.55 |
| Am [-] | | 0.54 | 0.73 | 0.67 | 0.53 | 0.73 | 0.67 |
| As [-] | | 0.56 | 1.10 | 0.88 | 0.59 | 1.10 | 0.88 |
| R1f/Wf [%] | | 52.0 | 48.3 | 49.2 | 52.0 | 48.3 | 49.2 |
| R1r/Wr [%] | | 61.5 | 65.1 | 56.7 | 68.5 | 65.1 | 56.7 |
| Hf/Wf [%] | | 39.7 | 42.2 | 41.7 | 39.7 | 42.2 | 41.7 |
| Hr/Wr [%] | | 32.1 | 27.8 | 30.4 | 29.9 | 27.8 | 30.4 |
| Groove | | Y | Y | Y | Y | N | N |
| Initial cornering performance | | 9.0 | 8.9 | 9.2 | 7.5 | 6.9 | 7.3 |
| Transient characteristics | | 8.5 | 8.4 | 8.6 | 8.3 | 7.1 | 8.1 |
| Secondary cornering performance | Cornering performance | 8.4 | 8.8 | 9.0 | 7.3 | 7.8 | 7.0 |
| | Stability | 8.1 | 8.1 | 8.1 | 7.1 | 7.9 | 8.0 |

As shown in Tables 1 and 2, it is confirmed that the tire pair of each Example can contribute to improvement of the cornering performance of a vehicle. From the evaluation results, advantages of the present invention are clear.

### INDUSTRIAL APPLICABILITY

The above-described technology that is able to contribute to improvement of the cornering performance of a vehicle can also be applied to tire pairs for various motorcycles.

### REFERENCE SIGNS LIST

2 front tire
4, 44 tread
8,48 bead
10, 50 carcass
12,52 band
22, 62 carcass ply
24, 64 carcass cord
28, 68 band cord
42 rear tire

## Claims

1. A motorcycle tire pair comprising a front tire (2) and a rear tire (42), wherein
each of the front tire (2) and the rear tire (42) includes a pair of beads (8, 48), a carcass (10, 50) extending on and between a first bead (8, 48) and a second bead (8, 48) out of the pair of beads (8, 48), a band (12, 52) located radially outward of the carcass (10, 50), and a tread (4, 44) located radially outward of the band (12, 52),
the carcass (10, 50) includes a large number of carcass cords (24, 64) aligned with each other and each inclined relative to an equator plane (ELf, ELr),
the band (12, 52) includes a band cord (28, 68) extending substantially in a circumferential direction,
the tread (4, 44) has a tread surface (16, 56) that comes into contact with a road surface,
in a meridian cross-section of each of the front tire (2) and the rear tire (42), a contour line (TLf, TLr) of the tread surface (16, 56) is equally divided into five parts,
the five parts are a center part (CLf, CLr) including an equator (Ef, Er), a pair of middle parts (MLf, MLr) connected to the center part (CLf, CLr), and a pair of shoulder parts (SLf, SLr) connected to the middle parts (MLf, MLr),
an arc that passes through the equator (Ef, Er) and both ends of the center part (CLf, CLr) is a first arc,
an arc that passes through an inner end and an outer end of the middle part (MLf, MLr) and a center thereof is a second arc,
an arc that passes through an inner end and an outer end of the shoulder part (SLf, SLr) and a center thereof is a third arc,
a ratio (R1f/R1r) of a radius R1f of the first arc of the front tire (2) to a radius R1r of the first arc of the rear tire (42) is a center arc index (Ac),
a ratio (R2f/R2r) of a radius R2f of the second arc of the front tire (2) to a radius R2r of the second arc of the rear tire (42) is a middle arc index (Am),
a ratio (R3f/R3r) of a radius R3f of the third arc of the front tire (2) to a radius R3r of the third arc of the rear tire (42) is a shoulder arc index (As),
**characterized in that**
the middle arc index (Am) is larger than the center arc index (Ac), and the shoulder arc index (As) is larger than the middle arc index (Am).

2. The motorcycle tire pair according to claim 1, wherein
the center arc index (Ac) is not less than 0.40 and not greater than 0.60, and
the shoulder arc index (As) is not less than 0.70 and not greater than 1.10.

3. The motorcycle tire pair according to claim 1 or 2, wherein
a distance in a radial direction from the equator (Ef, Er) to an end (Fe, Re) of the tread surface (16, 56) is a tread height (Hf, Hr),
a ratio of the tread height (Hf) to a nominal cross-sectional width in the front tire (2) is not less than 35% and not greater than 45%, and
a ratio of the tread height (Hr) to a nominal cross-sectional width in the rear tire (42) is not less than 30% and not greater than 35%.

4. The motorcycle tire pair according to any one of claims 1 to 3, wherein
a ratio of the radius R1f of the first arc to a nominal cross-sectional width in the front tire (2) is not less than 45% and not greater than 55%, and
a ratio of the radius R1r of the first arc to a nominal cross-sectional width in the rear tire (42) is not less than 45% and not greater than 65%.

5. The motorcycle tire pair according to any one of claims 1 to 4, wherein no groove that intersects the equator (Ef, Er) is formed on the tread surface (16, 56).

6. The motorcycle tire pair according to any one of claims 1 to 5, wherein an angle (θf, θr) of each carcass cord (24, 64) with respect to the equator plane (Elf, ELr) is not less than 20 degrees and not greater than 65 degrees.

7. The motorcycle tire pair according to claim 6, wherein each carcass cord (24, 64) is a cord formed from an organic fiber.

8. The motorcycle tire pair according to any one of claims 1 to 7, wherein
the front tire (2) has an axially outer end (Fe) being an end (Fe) of the tread surface (16) of the front tire (2),
the rear tire (42) has an axially outer end (Re) being an end (Re) of the tread surface (56) of the rear tire (42), and
the end (Fe, Re) of each tread surface (16, 56) is the outer (Fe, Re) end of the shoulder part (SLf, SLr).

## Patentansprüche

1. Motorradreifenpaar, umfassend einen Vorderreifen (2) und einen Hinterreifen (42), wobei
jeder von dem Vorderreifen (2) und dem Hinterreifen (42) ein Paar Wülste (8, 48), eine Karkasse (10, 50), die sich auf und zwischen einem ersten Wulst (8, 48) und einem zweiten Wulst (8, 48) von dem Paar Wülsten (8, 48) erstreckt, ein Band (12, 52), das sich radial außen von der Karkasse (10, 50) befindet, und eine Lauffläche (4, 44), die sich radial außen von dem Band (12, 52) befindet, umfasst,
die Karkasse (10, 50) eine große Anzahl von Karkasskorden (24, 64) umfasst, die miteinander ausgerichtet sind und jeweils relativ zu einer Äquatorebene (ELf, ELr) geneigt sind,
das Band (12, 52) einen Bandkord (28, 68) umfasst, der sich im Wesentlichen in einer Umfangsrichtung erstreckt,
die Lauffläche (4, 44) eine Laufflächenoberfläche (16, 56) aufweist, die mit einer Straßenoberfläche in Kontakt kommt,
in einem Meridianquerschnitt von jedem von dem Vorderreifen (2) und dem Hinterreifen (42) eine Konturlinie (TLf, TLr) der Laufflächenoberfläche (16, 56) gleichmäßig in fünf Teile unterteilt ist,
die fünf Teile ein Zentralteil (CLf, CLr), der einen Äquator (Ef, Er) umfasst, ein Paar Mittelteile (MLf, MLr), die mit dem Zentralteil (CLf, CLr) verbunden sind, und ein Paar Schulterteile (SLf, SLr) sind, die mit den Mittelteilen (MLf, MLr) verbunden sind,
ein Bogen, der durch den Äquator (Ef, Er) und beide Enden des Zentralteils (CLf, CLr) verläuft, ein erster Bogen ist,
ein Bogen, der durch ein inneres Ende und ein äußeres Ende des Mittelteils (MLf, MLr) und ein Zentrum davon verläuft, ein zweiter Bogen ist,
ein Bogen, der durch ein inneres Ende und ein äußeres Ende des Schulterteils (SLf, SLr) und ein Zentrum davon verläuft, ein dritter Bogen ist,
ein Verhältnis (R1f/R1r) eines Radius R1f des ersten Bogens des Vorderreifens (2) zu einem Radius R1r des ersten Bogens des Hinterreifens (42) ein Zentralbogenindex (Ac) ist,
ein Verhältnis (R2f/R2r) eines Radius R2f des zweiten Bogens des Vorderreifens (2) zu einem Radius R2r des zweiten Bogens des Hinterreifens (42) ein Mittelbogenindex (Am) ist,
ein Verhältnis (R3f/R3r) eines Radius R3f des dritten Bogens des Vorderreifens (2) zu einem Radius R3r des dritten Bogens des Hinterreifens (42) ein Schulterbogenindex (As) ist,
**dadurch gekennzeichnet, dass**
der Mittelbogenindex (Am) größer als der Zentralbogenindex (Ac) ist und der Schulterbogenindex (As) größer als der Mittelbogenindex (Am) ist.

2. Motorradreifenpaar nach Anspruch 1, wobei
der Zentralbogenindex (Ac) nicht kleiner als 0,40 und nicht größer als 0,60 ist und
der Schulterbogenindex (As) nicht kleiner als 0,70 und nicht größer als 1,10 ist.

3. Motorradreifenpaar nach Anspruch 1 oder 2, wobei
ein Abstand in einer radialen Richtung von dem Äquator (Ef, Er) zu einem Ende (Fe, Re) der Laufflächenoberfläche (16, 56) eine Laufflächenhöhe (Hf, Hr) ist,
ein Verhältnis der Laufflächenhöhe (Hf) zu einer Nennquerschnittsbreite in dem Vorderreifen (2) nicht kleiner als 35% und nicht größer als 45% ist und
ein Verhältnis der Laufflächenhöhe (Hr) zu einer Nennquerschnittsbreite in dem Hinterreifen (42) nicht kleiner als 30% und nicht größer als 35% ist.

4. Motorradreifenpaar nach einem der Ansprüche 1 bis 3, wobei
ein Verhältnis des Radius R1f des ersten Bogens zu einer Nennquerschnittsbreite in dem Vorderreifen (2) nicht kleiner als 45% und nicht größer als 55% ist und
ein Verhältnis des Radius R1r des ersten Bogens zu einer Nennquerschnittsbreite in dem Hinterreifen (42) nicht kleiner als 45% und nicht größer als 65% ist.

5. Motorradreifenpaar nach einem der Ansprüche 1 bis 4, wobei keine Rille, die den Äquator (Ef, Er) schneidet, auf der Laufflächenoberfläche (16, 56) gebildet ist.

6. Motorradreifenpaar nach einem der Ansprüche 1 bis 5, wobei ein Winkel (θf, θr) jedes Karkasskords (24, 64) in Bezug auf die Äquatorebene (ELf, ELr) nicht kleiner als 20 Grad und nicht größer als 65 Grad ist.

7. Motorradreifenpaar nach Anspruch 6, wobei jeder Karkasskord (24, 64) ein Kord ist, der aus einer organischen Faser gebildet ist.

8. Motorradreifenpaar nach einem der Ansprüche 1 bis 7, wobei
der Vorderreifen (2) ein axial äußeres Ende (Fe) aufweist, das ein Ende (Fe) der Laufflächenoberfläche (16) des Vorderreifens (2) ist,
der Hinterreifen (42) ein axial äußeres Ende (Re) aufweist, das ein Ende (Re) der Laufflächenoberfläche (56) des Hinterreifens (42) ist, und
das Ende (Fe, Re) jeder Laufflächenoberfläche (16, 56) das äußere (Fe, Re) Ende des Schulterteils (SLf, SLr) ist.

## Revendications

1. Paire de pneumatiques pour motocyclette comprenant un pneumatique avant (2) et un pneumatique arrière (42), dans laquelle
chacun du pneumatique avant (2) et du pneumatique arrière (42) inclut une paire de talons (8, 48), une carcasse (10, 50) s'étendant sur et entre un premier talon (8, 48) et un second talon (8, 48) parmi la paire de talons (8, 48), une bande (12, 52) située radialement à l'extérieur de la carcasse (10, 50), et une bande de roulement (4, 44) située radialement à l'extérieur de la bande (12, 52),
la carcasse (10, 50) inclut un grand nombre de câblés de carcasse (24, 64) alignés les uns avec les autres et inclinés chacun relativement à un plan d'équateur (ELf, ELr),
la bande (12, 52) inclut un câblé de bande (28, 68) s'étendant sensiblement dans une direction circonférentielle,
la bande de roulement (4, 44) a une surface de bande de roulement (16, 56) qui vient en contact avec une surface routière,
dans une section transversale méridienne de chacun du pneumatique avant (2) et du pneumatique arrière (42), une ligne de contour (TLf, TLr) de la surface de bande de roulement (16, 56) est divisée de manière égale en cinq parties,
les cinq parties sont une partie centrale (CLf, CLr) incluant un équateur (Ef, Er), une paire de parties médianes (MLf, MLr) connectées à la partie centrale (CLf, CLr), et une paire de parties d'épaulement (SLf, SLr) connectées aux parties médianes (MLf, MLr),
un arc qui passe à travers l'équateur (Ef, Er) et les deux extrémités de la partie centrale (CLf, CLr) est un premier arc,
un arc qui passe à travers une extrémité intérieure et une extrémité extérieure de la partie médiane (MLf, MLr) et un centre de celle-ci est un deuxième arc,
un arc qui passe à travers une extrémité intérieure et une extrémité extérieure de la partie d'épaulement (SLf, SLr) et un centre de celle-ci est un troisième arc,
un rapport (R1f/R1r) d'un rayon R1f du premier arc du pneumatique avant (2) sur un rayon R1r du premier arc du pneumatique arrière (42) est un indice d'arc central (Ac),
un rapport (R2f/R2r) d'un rayon R2f du deuxième arc du pneumatique avant (2) sur un rayon R2r du deuxième arc du pneumatique arrière (42) est un indice d'arc médian (Am),
un rapport (R3f/R3r) d'un rayon R3f du troisième arc du pneumatique avant (2) sur un rayon R3r du troisième arc du pneumatique arrière (42) est un indice d'arc d'épaulement (As),
**caractérisée en ce que**
l'indice d'arc médian (Am) est supérieur à l'indice d'arc central (Ac), et l'indice d'arc d'épaulement (As) est supérieur à l'indice d'arc médian (Am).

2. Paire de pneumatiques pour motocyclette selon la revendication 1, dans laquelle
l'indice d'arc central (Ac) n'est pas inférieur à 0,40 et n'est pas supérieur à 0,60, et
l'indice d'arc d'épaulement (As) n'est pas inférieur à 0,70 et n'est pas supérieur à 1,10.

3. Paire de pneumatiques pour motocyclette selon la revendication 1 ou 2, dans laquelle
une distance dans une direction radiale depuis l'équateur (Ef, Er) jusqu'à une extrémité (Fe, Re) de la surface de bande de roulement (16, 56) est une hauteur de bande de roulement (Hf, Hr),
un rapport de la hauteur de bande de roulement (Hf) sur une largeur de section transversale nominale dans le pneumatique avant (2) n'est pas inférieur à 35 % et n'est pas supérieur à 45 %, et
un rapport de la hauteur de bande de roulement (Hr) sur une largeur de section transversale nominale dans le pneumatique arrière (42) n'est pas inférieur à 30 % et n'est pas supérieur à 35 %.

4. Paire de pneumatiques pour motocyclette selon l'une quelconque des revendications 1 à 3, dans laquelle
un rapport du rayon R1f du premier arc sur une largeur de section transversale nominale dans le pneumatique avant (2) n'est pas inférieur à 45 % et n'est pas supérieur à 55 %, et
un rapport du rayon R1r du premier arc sur une largeur de section transversale nominale dans le pneumatique arrière (42) n'est pas inférieur à 45 % et n'est pas supérieur à 65 %.

5. Paire de pneumatiques pour motocyclette selon l'une quelconque des revendications 1 à 4, dans laquelle aucune rainure qui recoupe l'équateur (Ef, Er) n'est formée sur la surface de bande de roulement (16, 56).

6. Paire de pneumatiques pour motocyclette selon l'une quelconque des revendications 1 à 5, dans laquelle un angle (θf, θr) de chaque câblé de carcasse (24, 64) par rapport au plan d'équateur (E1f, E1r) n'est pas inférieur à 20 degrés et n'est pas supérieur à 65 degrés.

7. Paire de pneumatiques pour motocyclette selon la revendication 6, dans laquelle chaque câblé de carcasse (24, 64) est un câblé formé à partir d'une fibre organique.

8. Paire de pneumatiques pour motocyclette selon l'une quelconque des revendications 1 à 7, dans laquelle
le pneumatique avant (2) a une extrémité axialement extérieure (Fe) qui est une extrémité (Fe) de la surface de bande de roulement (16) du pneumatique avant (2),
le pneumatique arrière (42) a une extrémité axialement extérieure (Re) qui est une extrémité (Re) de la surface de bande de roulement (56) du pneumatique arrière (42), et
l'extrémité (Fe, Re) de chaque surface de bande de roulement (16, 56) est l'extrémité extérieure (Fe, Re) de la partie d'épaulement (SLf, SLr).
